# EUROPEAN PATENT SPECIFICATION

(11) **EP 4 193 219 B1**
(45) Date of publication and mention of the grant of the patent: **08.07.2026**
(21) Application number: 21759153.6
(22) Date of filing: 04.08.2021
(51) Int. Cl.: G02C 11/00, G02C 5/22

(54) **ELECTRONIC EYEGLASSES**
ELEKTRONISCHE BRILLEN
LUNETTES ÉLECTRONIQUES

(30) Priority: 10.08.2020 IT 202000019846
(43) Date of publication of application: 14.06.2023
(73) Proprietor: Luxottica S.r.l., 32021 Agordo (BL) (IT)
(72) Inventor: BORSOI, Fabio, 31029 Vittorio Veneto (IT); PELLEGRINI, Daniele, 32100 Belluno (IT); MICHELON, Dino, 32014 Ponte Nelle Alpi (IT)
(74) Representative: Modiano, Micaela Nadia
(86) International application number: PCT/IB2021/057126
(87) International publication number: WO 2022/034438

(56) References cited:
- EP-A1- 3 258 308
- EP-A1- 3 396 438
- US-A1- 2018 210 236
- US-B1- 10 582 295

## Description

The present invention relates to electronic eyeglasses. More particularly, the invention relates to electronic eyeglasses which integrate electronic components and sensors.

As is known, electronic eyeglasses are increasingly widespread on the market, and each manufacturer has the goal of optimizing the efficiency of the electronics in the eyeglasses, and therefore of optimizing their consumption in order to increase battery life, even despite high performance of the eyeglasses, and of making the electronic eyeglasses as similar as possible to eyeglasses of the "normal" type, thus avoiding the electronic components and the sensors having an excessive impact on the aesthetics of said eyeglasses. This is true both for the lens part and for the frame part. It is therefore necessary to adopt an aesthetics that conceals the cable, the sensors and all the electronics contained in the eyeglasses, so that not only it is not accessible on the part of the user but it is also hidden and perfectly integrated with the aesthetics of the object.

Furthermore, in particular, electronic eyeglasses must be able to have available one or more devices adapted to sense a voluntary action on the part of the user in order to implement functions of the electronic eyeglasses or sensors that detect the user's will and appropriately implement these functions. Therefore, it is possible to have one or more from the manual switch (e.g., buttons) or sensors (e.g., light sensors, motion sensors, capacitive touch sensors, ambient sensors, inertial sensors, etcetera).

Electronic eyeglasses are known in the prior art in which the flexible cable runs in a duct provided for this purpose along the entire front between the right lens and the left lens to mutually connect the temples.

This flexible cable is therefore concealed by means of a covering system, which on the one hand is functional but on the other hand is aesthetically unsatisfactory.

Technical solutions are also known in which there is a capacitive sensor of the so-called "touch swift" type, but this sensor is not totally integrated within the flexible cable but is generically arranged inside the device (for example in the temples).

Prior art solutions are known from US2018/210236 A1, EP 3 396 438 A1 and US 10 582 295 B1.

The aim of the present invention is to provide electronic eyeglasses in which the flexible cable passing through the front allows to increase the flexibility of the system from the electronic/software point of view and also allows to integrate the sensor capable of detecting the gestures made by the user.

Within this aim, an object of the present invention is to provide electronic eyeglasses in which the flexible cable is concealed as much as possible in the front of the eyeglasses without compromising its aesthetics and/or functionality.

Another object of the invention is to provide electronic eyeglasses capable of detecting when they are worn by a user.

Not least object of the present invention is to provide electronic eyeglasses that are highly reliable, relatively easy to provide and at competitive costs.

This aim and these and other objects that will become better apparent hereinafter are achieved by electronic eyeglasses, comprising a front and a pair of temples respectively connected to the front by means of hinges, and further comprising a flexible cable adapted to be incorporated within said front, in order to carry data signals and/or power supply to said temples, characterized in that said flexible cable forms at least one active region adapted to act as a capacitive sensor in order to detect gestures on the part of the user, said capacitive sensor being integrated within said flexible cable and being thus arranged at the front.

In particular, the flexible cable is incorporated within said front by means of an overmolding process or other methods known in the background art.

Further characteristics and advantages of the invention will become better apparent from the description of preferred but not exclusive embodiments of the electronic eyeglasses according to the invention, illustrated by way of non-limiting example in the accompanying drawings, wherein:

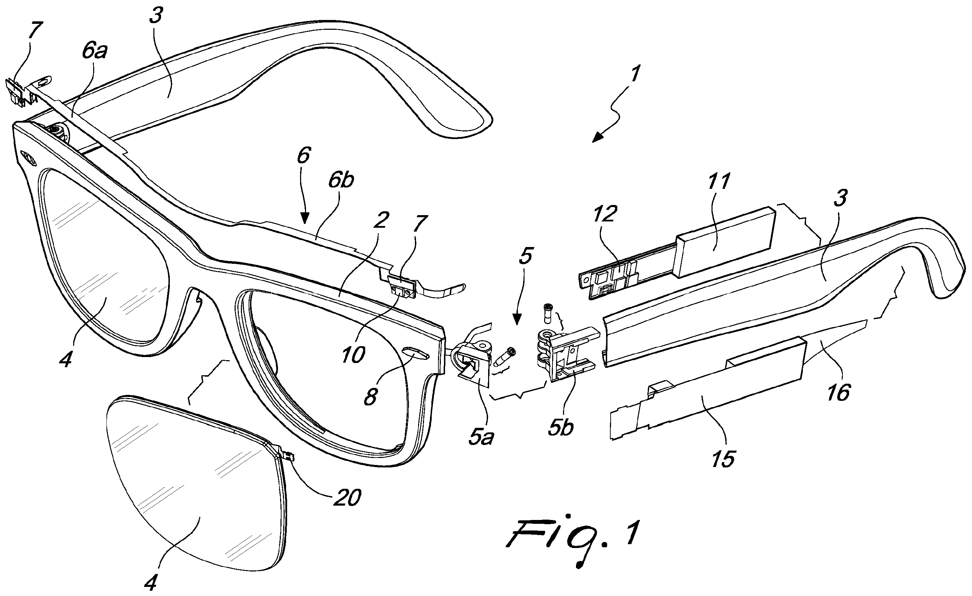

Figure 1 is an exploded front perspective view of the electronic eyeglasses according to the present invention;

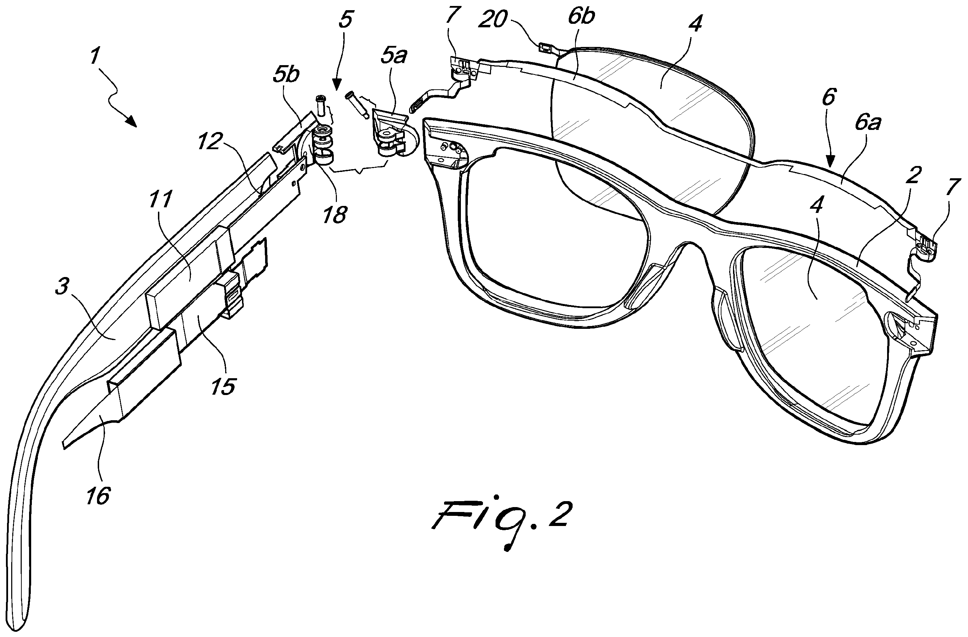

Figure 2 is an exploded rear perspective view of the electronic eyeglasses according to the present invention;

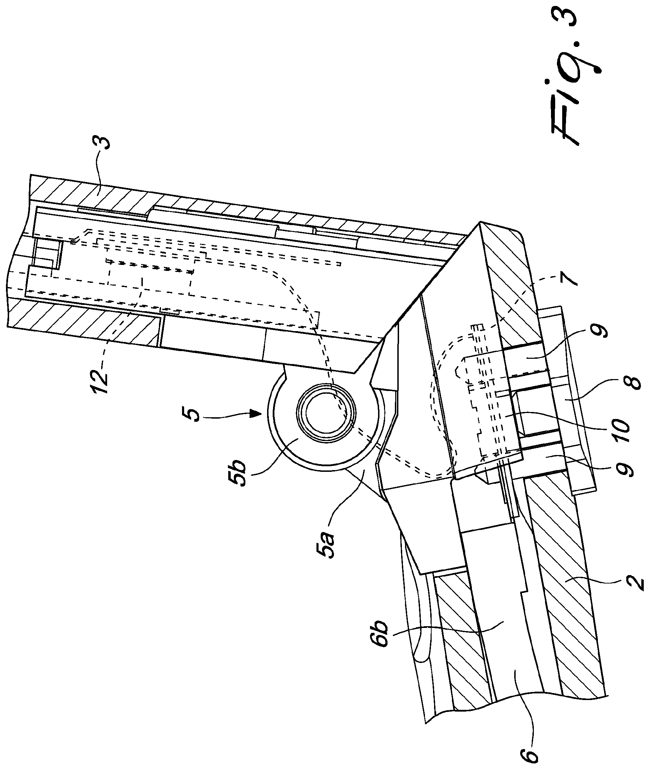

Figure 3 is a longitudinal sectional view of a detail of the hinge region of the electronic eyeglasses according to the invention;

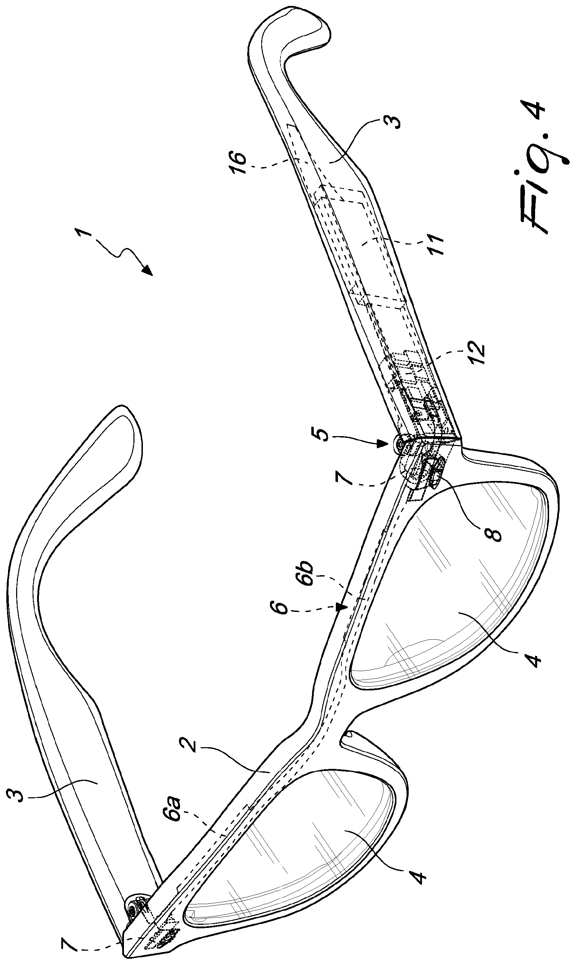

Figure 4 is a perspective view of the eyeglasses according to the invention in assembled condition.

With reference to the figures, the electronic eyeglasses according to the invention, generally designated by the reference numeral 1, comprise a front 2 adapted to be coupled to a pair of temples 3 by means of a pair of respective hinges 5. A pair of lenses 4 completes the eyeglasses 1.

Conveniently, the front 2 incorporates an overmolded flexible cable 6 which is adapted to mutually connect the temples 3 with a signal/data connection but also with a power supply in order to charge a battery accommodated within the temple 3.

At the top of the front region that accommodates the lenses 4, the flexible cable 6 has a capacitive sensor 6a, 6b which is mainly adapted to detect gestures of the user.

As an alternative, the capacitive sensor can be replaced and/or integrated with an accelerometer and/or other electronic device. Generally, the region of the flexible cable 6 above the lenses is therefore dedicated to a device capable of detecting gestures of the user, be it a capacitive sensor, an accelerometer and/or other electronics. Said gestures allow, for example, to darken or lighten the lenses according to the preferences of the user.

The capacitive sensor 6a, 6b can be furthermore adapted to perform other functions such as: switching on and off the eyeglasses, detecting wearability on the part of the user and in general collecting every input on the part of the user.

Essentially, the flexible cable 6 has active regions 6a, 6b which are touch sensitive and adapted to be used as capacitive sensor. With this implementation, the flexible cable 6 has regions 6a, 6b that are slightly larger at the top of the lenses 4 with respect to the remaining central portion of the cable 6, so as to have the largest possible active region, so as to increase sensitivity and capacity to detect voluntary touch reactions in the active regions.

The flexible cable 6 is overmolded at a rear region of the front 2 and is provided at the respective ends with plates 7, which are adapted to be coupled to a locking device 8, provided at the front 2 of the eyeglasses and provided by a substantially elliptical element provided internally with locking pins 9.

Conveniently, the locking pins 9 are coupled at fixing holes formed in the plates 7.

Advantageously, the locking device 8 is made of a material adapted to diffuse light so as to collect ambient light and diffuse it onto an ambient light sensor 10 provided at the plates 7.

The temple 3, as mentioned, integrates the electronic components and the battery, designated by the reference numeral 11. The electronic components are designated by the reference numeral 12. The battery 11 and the electronic components 12 are inserted in the temple 3 by making them slide, inserting them at the end of the temple 3 which accommodates the component of the hinge 5 and making them slide toward the rear end of the temple 3.

The insertion of the battery 11 and of the electronics 12 may occur alternatively with a bayonet coupling method and subsequent sealing.

Conveniently, the temple 3, at its outermost part, but still accommodated within the body of the temple 3, may have a further capacitive sensor 15 which allows to detect the gestures of the user, like the active regions 6a, 6b of the flexible cable 6.

Furthermore, a further capacitive sensor 16 may be present which allows to detect whether the eyeglasses are being worn or not by the user.

The active regions 6a, 6b and the region corresponding to the capacitive sensor 15 allow to detect gestures of the user.

The user can make single or multiple touches or taps on the sensitive region 6a, 6b, which are detected as sudden impulses and with a given force.

Conveniently, the sensor 16 which detects whether the eyeglasses are being worn can be, as mentioned, a capacitive sensor or inertial units with 3/6 axes may be used (accelerometer, accelerometer plus gyroscope) or also an adherence sensor located in the nose pads of the eyeglasses (not shown in the figures).

The electronic eyeglasses according to the invention may furthermore comprise a capacitive sensor of the touch type, which can be arranged in the front part of the temple 3, proximate to the hinge 5. The capacitive sensor of the touch type may be replaced by an inertial unit with 3/6 axes (accelerometer, accelerometer plus gyroscope), also arranged in the front part of the temple 3. The user can make single or multiple touches or taps on the temple 3 which are detected as sudden impulses and with a given force.

Furthermore, the hinge 5 is divided into a hinge component 5a that couples directly to the front 2 and a hinge component 5b that couples to the temple 3. The hinge allows the passage of the flexible cable from the temples to the front.

An LED emitter 18 is arranged at the region of the hinge component 5a (or 5b) that is directed toward the user when the eyeglasses are being worn and provides a luminous notification indication to the user, related for example to the level of the battery, or other information.

Other sensors and/or emitters, such as, by way of non-exhaustive example, temperature sensors, pressure sensors or, more generically, ambient sensors may also be arranged at the region of the hinge component 5a or 5b and provide a notification indication to the user via the LED emitter 18 or via an app provided for this purpose.

The active regions 6a, 6b as well as the capacitive sensor 15 allow to control the degree of darkening of the lenses, for example by means of the sliding movement of the hand from left to right, or vice versa, at said active regions 6a, 6b and at the capacitive sensor 15.

Moreover, the electronic eyeglasses according to the invention may comprise a reset sensor. In this case, at least for one of the temples 3 there is, inside it, a printed circuit 11 which supports the electronics, which comprise a Hall sensor 12 which allows to detect the presence of magnetic fields (strength and direction). This component allows to define intensity thresholds of the magnetic field and its directionality, beyond which the sensor is activated.

When the reset sensor is activated, it is possible to have the electronic eyeglasses perform various operations programmed into the firmware. For example, one of these operations is a reset of the system.

It is also possible to provide a Hall sensor which is adapted to trigger for example switching on/off functions or others.

The reset sensor 12 is conveniently integrated within the temple 3 without having an access toward the external environment, thus preserving the aesthetics of the temple and the integrity of the sensor.

In practice it has been found that the electronic eyeglasses according to the invention fully achieve the intended aim and objects, since they allow to accommodate an overmolded flexible cable which is adapted to supply power to the battery of the eyeglasses and to carry the data signals from one temple to the other.

Furthermore, the flexible cable defines active regions which act as capacitive sensors in order to detect gestures on the part of the user, which are capable of modifying, for example, the degree of darkening of the lenses following a simple movement with the hand performed by the user.

The electronic eyeglasses thus conceived are susceptible of numerous modifications and variations, all of which are within the scope of the accompanying claims.

All the details may furthermore be replaced with other technically equivalent elements.

In practice, the materials used, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Electronic eyeglasses (1), comprising a front (2) and a pair of temples (3) respectively connected to the front by means of hinges (5), and further comprising a flexible cable (6) adapted to be incorporated within said front (2), in order to carry data signals and/or power supply to said temples (3), **characterized in that** said flexible cable forms at least one active region (6a, 6b) adapted to act as a capacitive sensor in order to detect gestures on the part of the user, said capacitive sensor being integrated within said flexible cable (6) and being thus arranged at the front (2).

2. The electronic eyeglasses according to claim 1, **characterized in that** said flexible cable (6) has, at its ends, a pair of plates (7) adapted to support at least one ambient light sensor (10).

3. The electronic eyeglasses according to the preceding claim 2, **characterized in that** they comprise a locking element (8) adapted to be inserted in holes formed in the front, in order to couple at the rear of the front with said plates (7).

4. The electronic eyeglasses according to claim 3, **characterized in that** said locking element (8) is made of a material adapted to diffuse light so as to collect ambient light and diffuse it onto an ambient light sensor (10) provided at said plates (7).

5. The electronic eyeglasses according to one or more of the preceding claims, **characterized in that** they comprise a battery (11) and electronic circuitry (12) which are adapted to be accommodated within at least one of said temples (3).

6. The electronic eyeglasses according to one or more of the preceding claims, **characterized in that** they comprise an additional capacitive sensor (15) adapted to be inserted in at least one of said temples in order to detect gestures on the part of the user.

7. The electronic eyeglasses according to one or more of the preceding claims, **characterized in that** they comprise at least one additional sensor (16), which is accommodated within at least one of said temples (3) and is adapted to detect whether said eyeglasses are being worn or not by said user.

8. The electronic eyeglasses according to claim 6, **characterized in that** said at least one additional sensor (16) accommodated within at least one of said temples (3) in order to detect whether said eyeglasses are being worn or not by said user is of the capacitive or inertial or ambient type.

9. The electronic eyeglasses according to claim 7, **characterized in that** said at least one additional sensor (16) adapted to detect whether said eyeglasses are being worn or not by said user is an adherence sensor located in the nose pads of said eyeglasses.

10. The electronic eyeglasses according to one or more of the preceding claims, **characterized in that** at least one of the lenses (4) comprises a power supply cable (20) adapted to be inserted in said battery (11).

11. The electronic eyeglasses according to one or more of the preceding claims, **characterized in that** said hinge (5) comprises, in an internal position, adapted to be directed toward said user, at least one LED (18) in order to provide a feedback to said user.

12. The electronic eyeglasses according to claim 11, **characterized in that** said hinge (5) comprises additional sensors adapted to measure data which are useful for the user and to be displayed by means of said LED (18).

13. The electronic eyeglasses according to one or more of the preceding claims, **characterized in that** said flexible cable (6) is overmolded within said front (2), in a rear position so that it is directed toward said user, integrated within said front (2).

14. The electronic eyeglasses according to one or more of the preceding claims, **characterized in that** they comprise a reset sensor (12) integrated within at least one of said temples (3)

15. The electronic eyeglasses according to claim 14 **characterized in that** said reset sensor comprises a Hall sensor (12) adapted to detect the presence of magnetic fields.

## Patentansprüche

1. Elektronische Brille (1), umfassend eine Vorderseite (2) und ein Paar Bügel (3), die jeweils mittels Scharnieren (5) mit der Vorderseite verbunden sind, und ferner umfassend ein flexibles Kabel (6), das dazu ausgelegt ist, in die Vorderseite (2) integriert zu sein, um Datensignale und/oder eine Stromversorgung zu den Bügeln (3) zu führen, **dadurch gekennzeichnet, dass** das flexible Kabel mindestens einen aktiven Bereich (6a, 6b) bildet, der dazu ausgelegt ist, als ein kapazitiver Sensor zu dienen, um Gesten seitens des Benutzers zu detektieren, wobei der kapazitive Sensor in das flexible Kabel (6) integriert und somit an der Vorderseite (2) angeordnet ist.

2. Elektronische Brille nach Anspruch 1, **dadurch gekennzeichnet, dass** das flexible Kabel (6) an seinen Enden ein Paar Platten (7) aufweist, die dazu ausgelegt sind, mindestens einen Umgebungslichtsensor (10) zu stützen.

3. Elektronische Brille nach dem vorhergehenden Anspruch 2, **dadurch gekennzeichnet, dass** sie ein Verriegelungselement (8) umfasst, das dazu ausgelegt ist, in in der Vorderseite ausgebildete Löcher eingesetzt zu sein, um an der Rückseite der Vorderseite mit den Platten (7) gekoppelt zu werden.

4. Elektronische Brille nach Anspruch 3, **dadurch gekennzeichnet, dass** das Verriegelungselement (8) aus einem Material besteht, das dazu ausgelegt ist, Licht zu streuen, um Umgebungslicht zu sammeln und dieses auf einen an den Platten (7) bereitgestellten Umgebungslichtsensor (10) zu streuen.

5. Elektronische Brille nach einem oder mehreren der vorhergehenden Ansprüche, **dadurch gekennzeichnet, dass** sie eine Batterie (11) und eine elektronische Schaltung (12) umfasst, die dazu ausgelegt sind, in mindestens einem der Bügel (3) aufgenommen zu sein.

6. Elektronische Brille nach einem oder mehreren der vorhergehenden Ansprüche, **dadurch gekennzeichnet, dass** sie einen zusätzlichen kapazitiven Sensor (15) umfasst, der dazu ausgelegt ist, in mindestens einen der Bügel eingesetzt zu sein, um Gesten seitens des Benutzers zu detektieren.

7. Elektronische Brille nach einem oder mehreren der vorhergehenden Ansprüche, **dadurch gekennzeichnet, dass** sie mindestens einen zusätzlichen Sensor (16) umfasst, der in mindestens einem der Bügel (3) aufgenommen und dazu ausgelegt ist, zu detektieren, ob die Brille vom Benutzer getragen wird oder nicht.

8. Elektronische Brille nach Anspruch 6, **dadurch gekennzeichnet, dass** der mindestens eine zusätzliche Sensor (16), der in mindestens einem der Bügel (3) aufgenommen ist, um zu detektieren, ob die Brille vom Benutzer getragen wird oder nicht, vom kapazitiven oder Trägheits- oder Umgebungstyp ist.

9. Elektronische Brille nach Anspruch 7, **dadurch gekennzeichnet, dass** der mindestens eine zusätzliche Sensor (16), der dazu ausgelegt ist, zu detektieren, ob die Brille vom Benutzer getragen wird oder nicht, ein Haftsensor ist, der sich in den Nasenpolstern der Brille befindet.

10. Elektronische Brille nach einem oder mehreren der vorhergehenden Ansprüche, **dadurch gekennzeichnet, dass** mindestens eine der Linsen (4) ein Stromversorgungskabel (20) umfasst, das dazu ausgelegt ist, in die Batterie (11) eingesetzt zu sein.

11. Elektronische Brille nach einem oder mehreren der vorhergehenden Ansprüche, **dadurch gekennzeichnet, dass** das Scharnier (5) in einer internen Position, die dazu ausgelegt ist, auf den Benutzer gerichtet zu sein, mindestens eine LED (18) umfasst, um dem Benutzer eine Rückmeldung bereitzustellen.

12. Elektronische Brille nach Anspruch 11, **dadurch gekennzeichnet, dass** das Scharnier (5) zusätzliche Sensoren umfasst, die dazu ausgelegt sind, Daten zu messen, die für den Benutzer nützlich sind und mittels der LED (18) angezeigt werden sollen.

13. Elektronische Brille nach einem oder mehreren der vorhergehenden Ansprüche, **dadurch gekennzeichnet, dass** das flexible Kabel (6) innerhalb der Vorderseite (2) in einer hinteren Position umspritzt ist, so dass es, in die Vorderseite (2) integriert, auf den Benutzer gerichtet ist.

14. Elektronische Brille nach einem oder mehreren der vorhergehenden Ansprüche, **dadurch gekennzeichnet, dass** sie einen Rücksetzsensor (12) umfasst, der in mindestens einen der Bügel (3) integriert ist.

15. Elektronische Brille nach Anspruch 14, **dadurch gekennzeichnet, dass** der Rücksetzsensor einen Hall-Sensor (12) umfasst, der dazu ausgelegt ist, das Vorhandensein von Magnetfeldern zu detektieren.

## Revendications

1. Lunettes électroniques (1), comprenant une face (2) et une paire de branches (3) respectivement reliées à la face au moyen de charnières (5), et comprenant en outre un câble flexible (6) adapté à être incorporé dans ladite face (2), afin d'acheminer des signaux de données et/ou une alimentation électrique vers lesdites branches (3), **caractérisées en ce que** ledit câble flexible forme au moins une région active (6a, 6b) adaptée à faire fonction de capteur capacitif afin de détecter des gestes de la part de l'utilisateur, ledit capteur capacitif étant intégré dans ledit câble flexible (6) et étant ainsi agencé au niveau de la face (2).

2. Lunettes électroniques selon la revendication 1, **caractérisées en ce que** ledit câble flexible (6) présente, à ses extrémités, une paire de plaques (7) adaptées à supporter au moins un capteur de lumière ambiante (10).

3. Lunettes électroniques selon la revendication 2 précédente, **caractérisées en ce qu'**elles comprennent un élément de verrouillage (8) adapté à être inséré dans des trous formés dans la face, afin de s'accoupler à l'arrière de la face avec lesdites plaques (7).

4. Lunettes électroniques selon la revendication 3, **caractérisées en ce que** ledit élément de verrouillage (8) est réalisé en un matériau adapté à diffuser la lumière de manière à recueillir la lumière ambiante et la diffuser sur un capteur de lumière ambiante (10) disposé au niveau desdites plaques (7).

5. Lunettes électroniques selon une ou plusieurs des revendications précédentes, **caractérisées en ce qu'**elles comprennent une batterie (11) et une circuiterie électroniques (12) qui sont adaptées à être logées à l'intérieur d'au moins une desdites branches (3).

6. Lunettes électroniques selon une ou plusieurs des revendications précédentes, **caractérisées en ce qu'**elles comprennent un capteur capacitif supplémentaire (15) adapté à être inséré dans au moins une desdites branches afin de détecter des gestes de la part de l'utilisateur.

7. Lunettes électroniques selon une ou plusieurs des revendications précédentes, **caractérisées en ce qu'**elles comprennent au moins un capteur supplémentaire (16), qui est logé à l'intérieur d'au moins une desdites branches (3) et est adapté à détecter si lesdites lunettes sont portées ou non par ledit utilisateur.

8. Lunettes électroniques selon la revendication 6, **caractérisées en ce que** ledit au moins un capteur supplémentaire (16) logé à l'intérieur d'au moins une desdites branches (3) afin de détecter si lesdites lunettes sont portées ou non par ledit utilisateur est du type capacitif ou inertiel ou ambiant.

9. Lunettes électroniques selon la revendication 7, **caractérisées en ce que** ledit au moins un capteur supplémentaire (16) adapté à détecter si lesdites lunettes sont portées ou non par ledit utilisateur est un capteur d'adhérence situé dans les plaquettes nasales desdites lunettes.

10. Lunettes électroniques selon une ou plusieurs des revendications précédentes, **caractérisées en ce qu'**au moins un des verres (4) comprend un câble d'alimentation électrique (20) adapté à être inséré dans ladite batterie (11).

11. Lunettes électroniques selon une ou plusieurs des revendications précédentes, **caractérisées en ce que** ladite charnière (5) comprend, en position interne, adaptée à être dirigée vers ledit utilisateur, au moins une LED (18) afin de fournir un retour audit utilisateur.

12. Lunettes électroniques selon la revendication 11, **caractérisées en ce que** ladite charnière (5) comprend des capteurs supplémentaires adaptés à mesurer des données qui sont utiles pour l'utilisateur et destinées à être affichées au moyen de ladite LED (18).

13. Lunettes électroniques selon une ou plusieurs des revendications précédentes, **caractérisées en ce que** ledit câble flexible (6) est surmoulé à l'intérieur de ladite face (2), en position arrière de sorte à être dirigé vers ledit utilisateur, intégré dans ladite face (2).

14. Lunettes électroniques selon une ou plusieurs des revendications précédentes, **caractérisées en ce qu'**elles comprennent un capteur de réinitialisation (12) intégré dans au moins une desdites branches (3).

15. Lunettes électroniques selon la revendication 14, **caractérisées en ce que** ledit capteur de réinitialisation comprend un capteur à effet Hall (12) adapté à détecter la présence de champs magnétiques.
